# EUROPEAN PATENT SPECIFICATION

(11) **EP 1 394 540 B1**
(45) Date of publication and mention of the grant of the patent: **15.09.2010**
(21) Application number: 02722916.0
(22) Date of filing: 01.05.2002
(51) Int. Cl.: G01N 31/22, B01L 3/00, B01L 99/00

(54) **SIMPLIFIED ANALYZER, AND METHOD OF PRODUCING THE SAME**
VEREINFACHTES ANALYSEGERÄT UND HERSTELLUNGSVERFAHREN DAFÜR
ANALYSEUR SIMPLIFIE, ET SON PROCEDE DE PRODUCTION

(30) Priority: 07.05.2001 JP 2001136538
(43) Date of publication of application: 03.03.2004
(73) Proprietor: Kyoritsu Chemical-Check Lab., Corp., Tokyo 145 (JP)
(72) Inventor: OKAUCHI, Kanji, Ota-ku, Tokyo 145-0071 (JP); KAWARABAYASHI, Takao, Yokohama-shi, Kanagawa 223-0053 (JP)
(74) Representative: Higgs, Jonathan
(86) International application number: PCT/JP2002/004351
(87) International publication number: WO 2002/090973

(56) References cited:
- JP-A- 2 168 158
- JP-A- 58 193 461
- JP-U- 3 017 562
- JP-U- 60 169 571
- JP-U- 61 161 758
- US-A- 4 409 182

## Description

### TECHNICAL FIELD

This invention relates to a simplified analyzer.

### BACKGROUND ART

In general, there have been broadly used an analytical test paper made by impregnating water absorbing paper with color reaction reagent for making a water quality analysis or the like. In order to analyze water quality by using a conventional simplified analyzer using the analytical test paper, the analysis of the water quality is carried out by soaking the analyzer in testing fluid to be analyzed to react the testing fluid with the color reaction reagent and comparing the color of the testing fluid, which changes color as the result of the reaction with the color reaction reagent, with a standard color prescribed as a reference color.

However, the conventional analyzer using the analytical test paper has a disadvantage in which it is inferior in sensitivity and accuracy of water quality analysis because the color reaction reagent may elute into the testing fluid when soaking the test paper in the testing fluid.

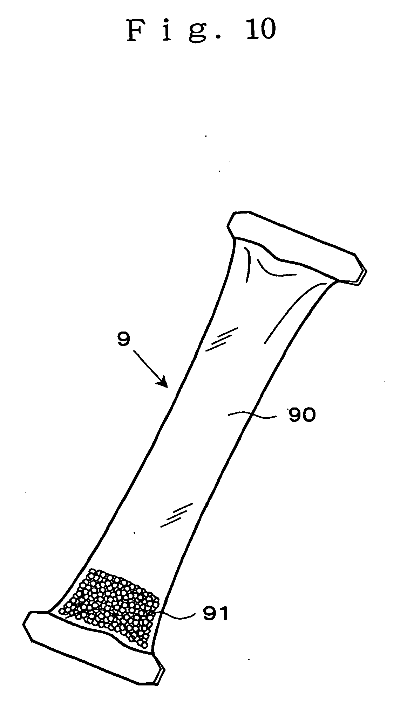

Correspondingly, there is known a simplified analyzer provided for improving the analyzing sensitivity as illustrated in FIG. 10. The conventional simplified analyzer 9 shown in FIG. 10 has a transparent or semitransparent hermetic container 90 containing powdered color reaction reagent 91. The hermetic container 90 may be made of a polyethylene tube having both ends sealed by thermal welding or ultrasonic welding or in another method.

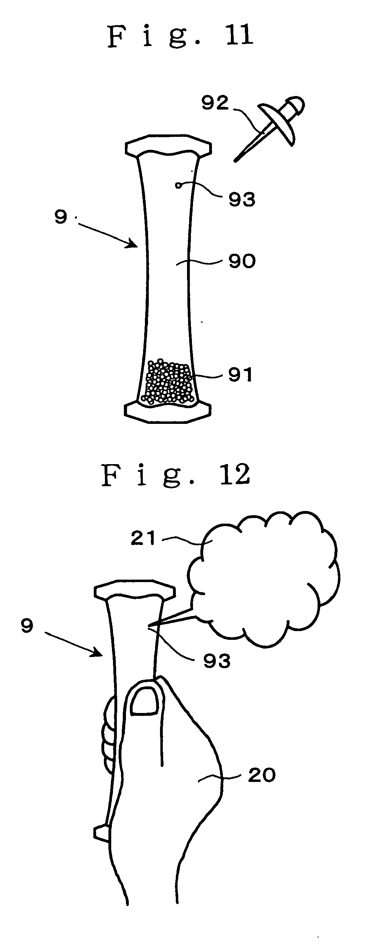

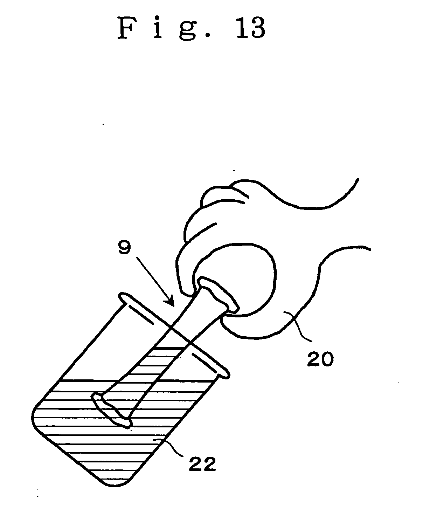

In conducting an water quality analysis by use of the simplified analyzer shown in FIG. 10, it is necessary to thrust a pin 92 separately prepared into the hermetic container 90 to make a small through hole 93 in the hermetic container 90. Then, the air or gas 21 in the hermetic container 90 is let out of the container through the hole 93 by forcibly pinching the container 90 with fingers 20 as shown in FIG. 12, and thereafter, the hermetic container 90 is soaked in the testing fluid 22 to allow the testing fluid 22 to flow into the hermetic container 90 like a dropper as shown in FIG. 13. Consequently, the color reaction reagent 91 and the testing fluid 22 are mixed inside the hermetic container 90 to cause the color reaction. After the lapse of predetermined time, the water quality analysis is concluded by comparing the color changed as the result of the color reaction with a standard color to measure the concentration of the testing fluid.

The simplified analyzer described above has an advantage in that the color reaction reagent and the testing fluid to be analyzed can be increased in amount in comparison with the conventional analyzer using an analytical test paper. Thus, this simplified analyzer makes it possible to analyze even dilute testing fluid and can prevent the color reaction reagent from eluting into the testing fluid, consequently to conduct the required water quality analysis with high accuracy.

Since the aforementioned simplified analyzer requires the pin for piercing the hermetic container to conduct the water quality analysis, it can be said that this conventional simplified analyzer aiming at the simplicity of the structure is incomplete without such an additional component, and therefore, it is desired to be further improved. Besides, since the hermetic container is manually pierced with the pin, some inexperience workers may possibly pierce an awkward hole in the hermetic container, as the result of which it is possibly difficult to suck the testing fluid sucked into a small hermetic container or deal with a relatively small amount of testing fluid.

The present invention is made in the light of the foregoing disadvantages of the conventional analyzer and seeks to provide a novel simplified analyzer capable of being handled easily and surely without using any other tool such as a pin and a method for producing the simplified analyzer.

### DISCLOSURE OF THE INVENTION

To attain the object described above according to the present invention, there is provided a simplified analyzer as defined in claim 1.

When the analyzer is used, the tap member of the analyzer is removed from the hermetic container to let out the air of the container and suck test material to be analyzed into the container.

### BRIEF DESCRIPTION OF THE DRAWINGS

FIG. 1 is an explanatory diagram showing one embodiment of a simplified analyzer according to the present invention.
FIG. 2 is a cross sectional view taken along line A-A in FIG. 1.
FIG. 3 is a cross sectional view taken along line B-B in FIG. 2.
FIG. 4 is an explanatory diagram illustrative of the procedure for using the simplified analyzer according to the present invention.
FIG. 5 is an explanatory diagram illustrative of the procedure for using the simplified analyzer according to the present invention.
FIG. 6 is an explanatory diagram illustrative of the procedure for using the simplified analyzer according to the present invention.
FIG. 7 is an enlarged view showing a tap member used in the analyzer.
FIG. 8 is a view showing the simplified analyzer in its wrapped state according to the present invention.
FIG. 9 is a view showing the simplified analyzer in its wrapped state according to the present invention.
FIG. 10 is a view showing a conventional simplified analyzer.
FIG. 11 is a diagram illustrative of the procedure for using the conventional simplified analyzer.
FIG. 12 is a diagram illustrative of the procedure for using the conventional simplified analyzer.
FIG. 13 is a diagram illustrative of the procedure for using the conventional simplified analyzer.

### BEST MODE FOR CARRYING OUT THE INVENTION

The simplified analyzer according to the present invention is characterized by a see-through hermetic container containing a reaction reagent, and a tap member piercing detachably through the aforesaid hermetic container.

According to this structure of the analyzer of the invention, only by removing the tap member from the hermetic container with fingers, the air is let out of the container, and alternatively, test material to be analyzed can be introduced into the container. The term "see-through" used herein for the hermetic container means that the container is wholly made transparent or semitransparent or a part of the container is made transparent or semitransparent, so that the content in the container can be visually checked.

Further, the simplified analyzer of the present invention is characterized by making the hermetic container of flexible plastic material.

With this structure, the hermetic container can be deformed by being depressed with a finger to let out the air of the container and suck testing fluid to be analyzed into the container.

The simplified analyzer of the invention has another feature that the hermetic container has seam portions formed by sealing the both end parts thereof by welding, and the tap member is embedded in one of the seam portions.

Consequently, the area of contact between the hermetic container and the tap member becomes wide to increase resistance to a force for pulling out the tap, consequently to prevent the tap member from falling off accidentally. As a result, the sealing performance of the hermetic container is elevated to prevent the reaction reagent and testing fluid from leaking.

The aforementioned simplified analyzer according to the invention has still another characteristic in that the tap member may be formed of a string or rod material.

This characteristic structure enables the tap member to be optimized in shape.

The present invention has a further characteristic in that the tap member is provided on its one end with a finger hook having a larger diameter than the other part.

Thus, the tap member can easily be removed from the container by hooking a finger through the finger hook and pulling. When the tap member once pulled out is inserted into the container, the finger hook is caught on a through hole formed in the seam portion of the container to prevent the tap member from being entirely inserted in the container by accident.

The aforementioned simplified analyzer according to the invention has a further feature in that the other tip end of the tap member is formed in an acuminate shape.

With the tap member having the acuminate tip end, even when the tap member is pulled out, it can easily be inserted in the seam portion of the container once again. The acuminate shape of the tap member may be formed by cutting the tip end of the tap member slantwise or tapering the tap member toward the tip end.

The aforementioned simplified analyzer according to the invention has a further feature in that one tip end of the tap member protrudes outward over the other tip end as viewed in the longitudinal direction.

The protrusion at one of the tip ends of the tap member brings about resistance to a force for pulling up the tap member so as to prevent the tap member from coming off accidentally.

The present invention has a further characteristic in that the hermetic container and the tap member in the simplified analyzer of the invention are formed in different colors.

By forming the hermetic container and the tap member in the simplified analyzer of the invention in different colors, the tap member can readily be discerned when being drawn out from the hermetic container, thus to facilitate the required analytical work.

The present invention has a further characteristic in that one or more of the simplified analyzers according to the invention may be packed as one unit in a moisture-proof wrapping.

The reaction reagent contained in the hermetic container of the simplified analyzer packed in the moisture-proof wrapping can be completely protected without being affected by moisture in the air or the like.

Another object of the present invention is to provide a method for producing the aforementioned simplified analyzer having a characteristic in that the hermetic container can readily be produced by preheating the edge portion of the container and thermally sealing the preheated edge portion by welding while keeping the tap member in the edge portion.

According to this method, the hermetic container can securely be sealed by welding without adhering to the tap member, so that the tap member can easily be pulled out.

One embodiment of the present invention will be described in detail hereinafter.

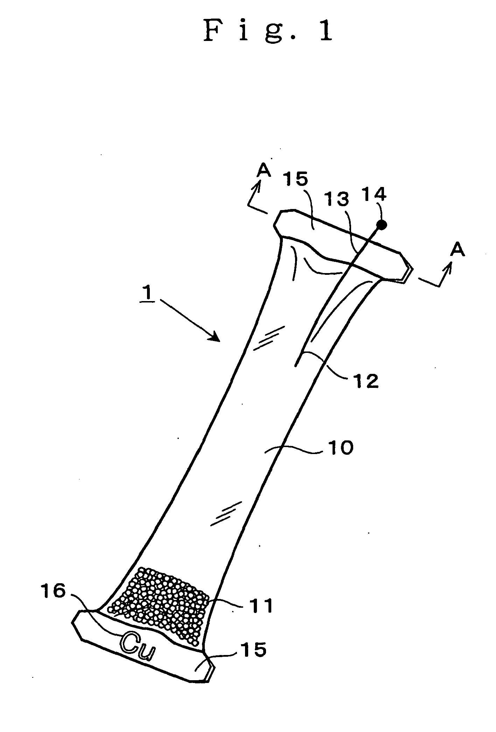

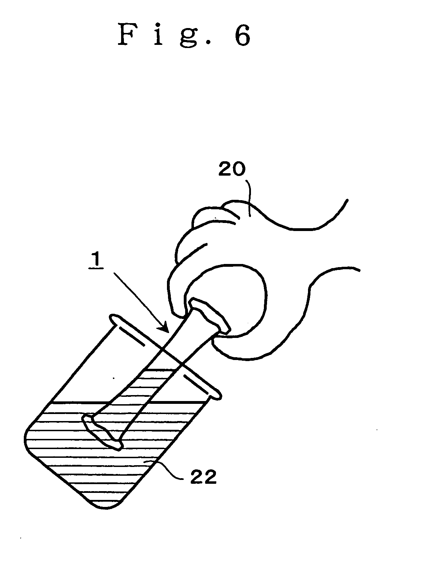

FIGS. 1 to 9 illustrate the embodiment of the simplified analyzer according to the present invention along with the processes of using the analyzer. In the illustrated embodiment, a color reaction reagent is used as a chemical agent for use in reaction. Just as one example, the simplified analyzer described herein is applied for analyzing water quality.

The simplified analyzer 1 generally comprises the transparent or semitransparent hermetic container 10 containing the color reaction reagent 11 and the tap member 12 partially inserted in the hermetic container 10. The tap member 12 can be pulled out from the hermetic container 10 with a finger 20, consequently to form a through hole 13 in the hermetic container.

The hermetic container 10 is made transparent or semitransparent, so that the color of the reagent can be visually checked from the outside after causing a color reaction. The hermetic container 10 is preferably made of chemically stable synthetic resin such as polyethylene, polyethylene terephthalate, and nylon. The hermetic container 10 is made flexible so that it can be deformed by being depressed with a finger to let out air or gas 21 of the container or suck testing fluid 22 into the container.

The tap member 12 is formed of a string or rod material as shown in FIG. 1 for example and partly thrust in the hermetic container so as to be pulled out of the hermetic container 10. The string-shaped (or rod-shaped) tap member 12 has a length, which is not specifically limited, so as not to come off accidentally. The tap member 12 is preferably made of chemically stable synthetic resin such as polyethylene, polypropylene, and polyethylene terephthalate.

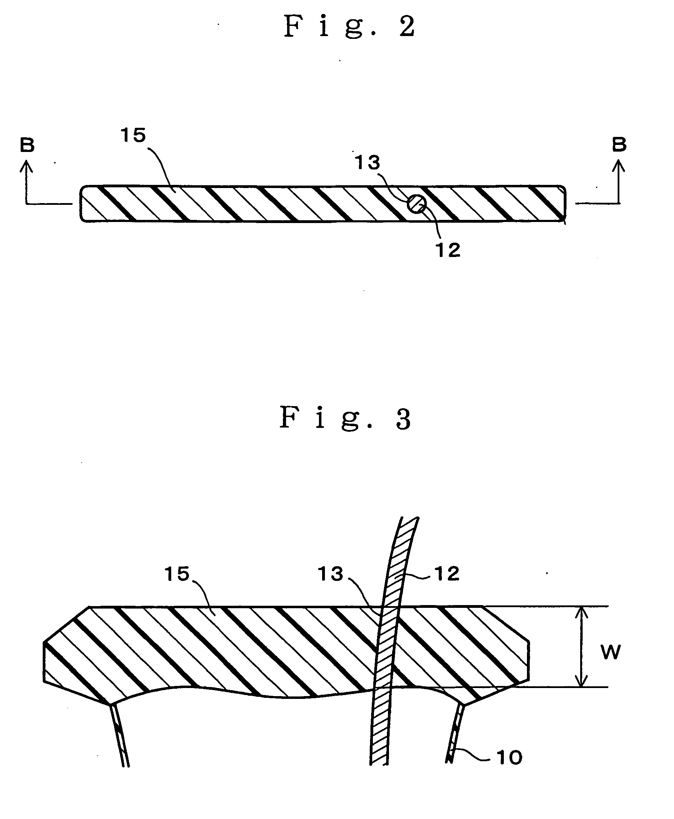

On both end portions of the tube-like hermetic container 10, there are formed seam portions 15 formed by thermally sealing the end portions of the container. In one of the seam portions 15, the tap member 12 is partly embedded by the length corresponding to the width W of seam portion 15 as shown in FIG. 2 and FIG. 3. With this structure, the hermetic container 10 (seam portion 15) and the tap member 12 come in contact with each other with a large area, consequently to bring about resistance to a force for pulling up the tap member so as to prevent the tap member from coming off accidentally. In addition, the sealing performance of the hermetic container is elevated to prevent the color reaction reagent 11 from leaking through the hole 13. Besides, even when the tap member 12 once pulled out is inserted into the container once again after sucking the testing fluid 22 into the container as described later, the testing fluid 22 sucked in the container can be prevented from leaking. The width W of the seam portion 15 is arbitrarily determined according to the size of the tap member 12 or other conditions. Where the width of the seam portion is too large, the resistance to the force for pulling out the tap member is needlessly increased. To be more specific, it is preferable to determine the width W of the order of 3 to 4 mm.

In the embodiment in FIG. 1, the tap member 12 is provided on its one end with a finger hook 14 having a larger diameter than the other part. According to this structure, the tap member 12 can easily be removed from the container 10 by hooking a finger through the finger hook 14 and pulling. When the tap member 12 once pulled out is inserted into the container 10, the finger hook 14 is caught on a through hole formed in the seam portion of the container to prevent the tap member 12 from being entirely inserted in the container 12 by accident. The way of forming the finger hook 14 is not specifically limited. The finger hook of the tap member may be made in the form of a mold ball yielded as the result of molding, or otherwise, the finger hook 14 separately prepared may be attached later to the stem of the tap member 12 with adhesives. Thus, the finger hook may be formed in this or other possible ways.

The tap member 12 may be formed in different color from that of the hermetic container 10. By coloring the tap member 12 in different color from that of the hermetic container 10, the tap member 12 is highly visible to be easily distinguishable from other components, thus to permit a tester to work faster without feeling stress. However, the present invention of course encompasses the simplified analyzer comprising the tap member 12 and the hermetic container 10 of the same color or uncolored.

The hermetic container 10 may be provided with an analyzing data display 16. The analyzing data display 16 indicates helpful information such as the content name (testing material "Cu" in FIG. 1 by way of example), representation of the limit value of analysis or other information. The information displayed may be marked by printing, embossing or other measures.

The tap member 12 can be inserted in the hermetic container 10 in the state of capable of being pulled out by the following method. That is, the tap member may be set in the hermetic container by preheating the edge portion of the hermetic container 10 made of synthetic resin at temperatures above the melting point of Tg, and then, thermally sealing the preheated edge portion by welding while keeping the tap member 12 in the edge portion. Thus, the seam portion 15 is formed at the edge portion of the hermetic container 10 by thermally sealing to firmly seal the hermetic container, but the tap member 12 and the seam portion 15 never melt together so as to be separatable by pulling the tap member 12. This is because the melting of the seam portion 15 is terminated before the tap member 12 reaches its melting point, although the tap member 12 is heated with the preheat applied to the hermetic container 10. Furthermore, the tap member comes in close contact with the hermetic container, leaving no space therebetween, owing to the part in the molten state of hermetic container 10, which flows into between the tap member 12 and the inside wall of the through hole 13 in the process of melting the hermetic container 10, and by virtue of the elastic force brought about by the tap member and hermetic container. As a result, the simplified analyzer of the invention never leaks the color reaction agent 11 and the testing fluid 22 even when the tap member 12 is once pulled out and again inserted therein upon sucking the testing fluid 22, as described later.

The melting points of the hermetic container 10 and the tap member 12 are not specifically limited, but it is preferable to use of the hermetic container 10 and the tap member 12 of the same melting point or tap member 12 having a higher melting point than the hermetic container 10 to prevent the hermetic container 10 and the tap member 12 from being completely molten together. Thus, it is desirable to choose the materials of the hermetic container 10 and the tap member 12 so as to satisfy such conditions of the melting point. However, the present invention does not at all exclude use of the tap member 12 having a melting point lower than that of the hermetic container 10. In the case of using the tap member having the lower melting point, the hermetic container 10 and the tap member 12 can be certainly prevented from being melted together by controlling the melting conditions such as a pressure to be applied to the hermetic container and the tap member.

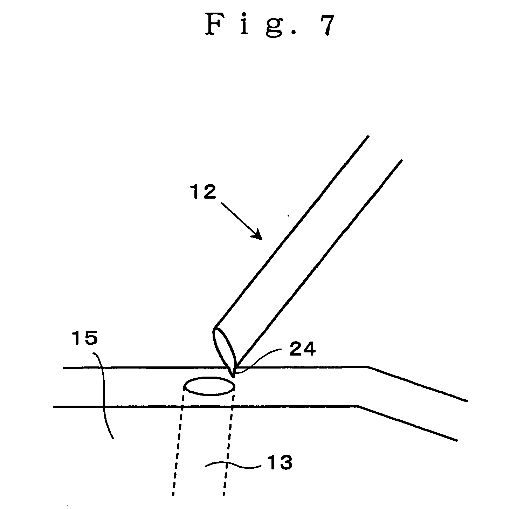

The tap member 12 can be pulled out, hooking a finger through the finger hook 14 of the tap member. However, if the resistance brought about in pulling out the tap member is small more than necessary, it remains possible that the tap member comes off accidentally. In such a case, the surface of the tap member 12 may be knurled so as not to come off with ease. Thus, the resistance to the force for pulling off the tap member can be arbitrarily regulated Moreover, one tip end of the tap member 12 (one of the tip ends of the tap member 12, from which the tap member is inserted into the hermetic container 10) protrudes outward over the other tip end as viewed in the longitudinal direction, to form a protrusion 24, as shown in FIG. 7. With this protrusion 24, resistance to a force for pulling out the tap member 12 is brought about around the through hole 13 so as to prevent the tap member 12 from coming off accidentally with ease. The protrusion 24 may be formed separately from the tap member 12 by molding or integrally with the tap member 12 by using burr left in the process of molding the tap member 12. The protrusion 24 may be suitably shaped according to need. It is a matter of course that the present invention encompasses the tap member having no protrusion 24.

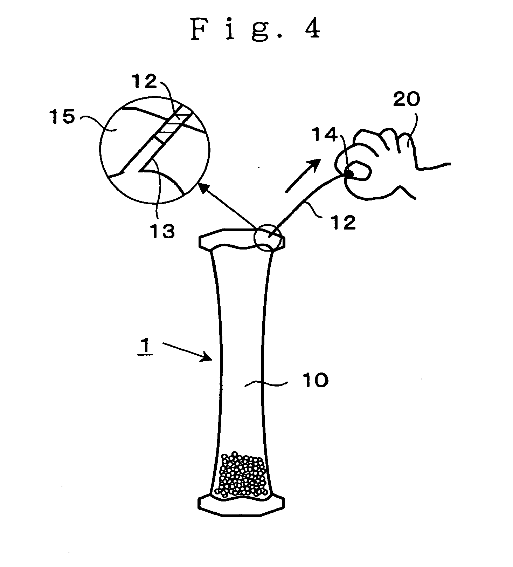

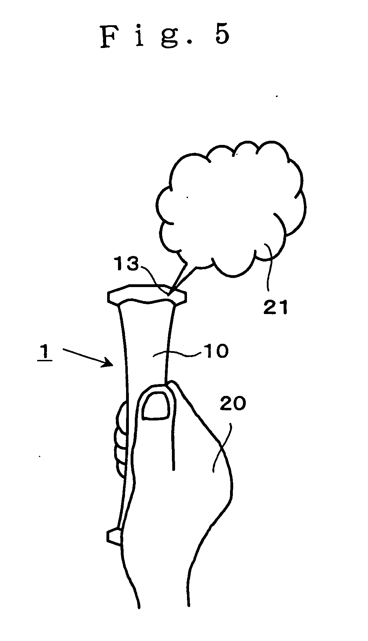

The simplified analyzer 1 described above is handled in use by first pulling out the tap member 12 to make the through hole 13 as shown in FIG. 4, and then, pushing the hermetic container 10 with a finger 20 to extrude the air or other gas 21 out of the hermetic container 10 through the through hole 13 as shown in FIG. 5. Next, the simplified analyzer is soaked in the testing fluid 22 to be analyzed, placing the through hole 13 under the testing fluid, and then, the finger 20 is released from the hermetic container 10 to suck the testing fluid 22 into the hermetic container 10. Subsequently, upon shaking the hermetic container 10 if necessary, after the lapse of the prescribed time, the color of the fluid reacted with the color reaction reagent is compared with a standard color prepared separately as a reference color to determine the concentration of the testing fluid.

After sucking the testing fluid 22 into the hermetic container 10 in performing the aforesaid water quality analysis, the tap member 12 once pulled out is again inserted into the through hole 13 to prevent the testing fluid 22 from leaking from the hermetic container. The reason why the testing fluid 22 can be prevented from leaking out is uncertain, but it is more than probable that it is because the tap member 12 inserted into the through hole comes in tight contact with the inner wall of the through hole 12 in the seam portion 15 with elasticities of the tap member and seam portion, and the surface tension of the testing fluid 22 is not as low as the fluid leaks out. Since the testing fluid 22 does not leak, the problems such that the leaked liquid may stain clothes and influence the human body harmfully can be eliminated.

The other tip end of the tap member 12 (the tip end from which the tap member 12 is inserted into the hermetic container 10) may be formed in an acuminate shape if desired. The acuminate shape of the tap member may be formed by cutting the tip end of the tap member slantwise or tapering the tap member toward the tip end as shown in FIG. 7. With the tap member having the acuminate tip end, even when the tap member 12 is pulled out, it can easily be inserted into the through hole 13 once again. The method for forming the acuminate shape of the tap member is not specifically limited, but it is better to cut the tip end of the tap member slantwise to form the acuminate shape. It is a matter of course that the present invention encompasses the tap member having its tip end cut orthogonally to the longitudinal direction.

As an alternative, another tap member prepared separately may be inserted into the through hole 13 in place of the tap member 12 pulled out from the hermetic container to prevent the testing fluid from leaking out. In this case, the tap member prepared separately may be tapered toward the tip end so as to be easily inserted into the through hole 13.

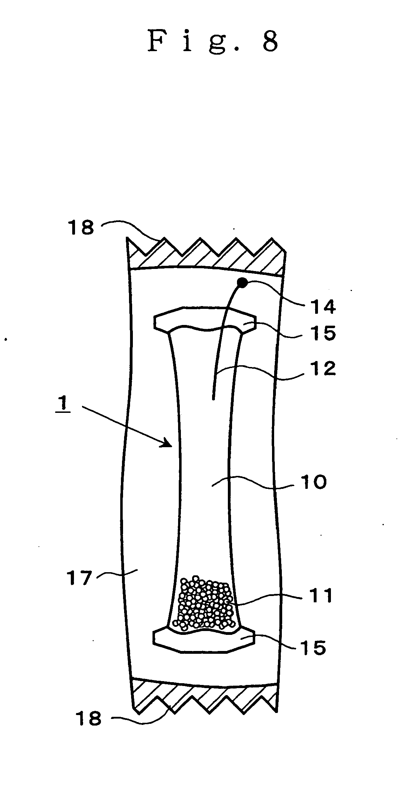

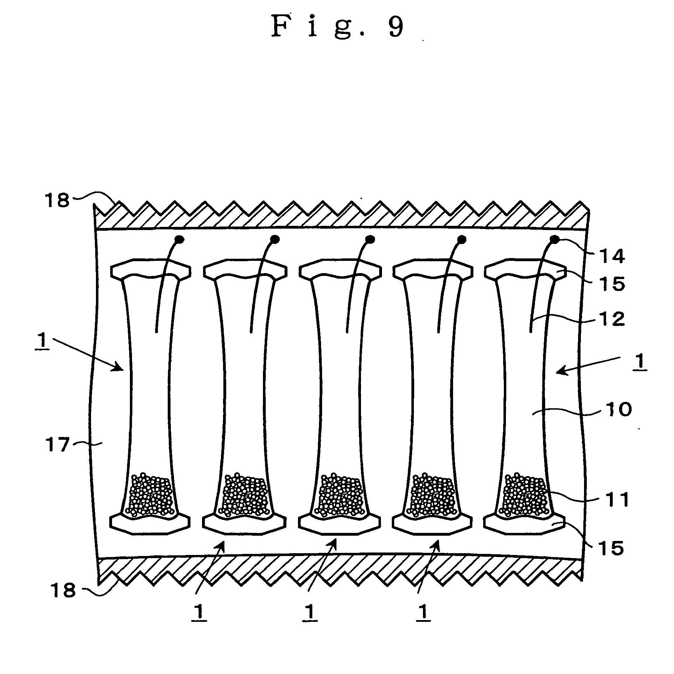

The aforementioned simplified analyzer 1 may be packed with a moisture-proof wrapping 17 as shown in FIG. 8 and FIG. 9. Thus, even when higher moisture-proofing property is required for the hermetic container 10 and the tap member 12, deterioration and deliquescence of the color reaction reagent 11 can assuredly be prevented. The moisture-proof wrapping 17 may be formed of synthetic resin sheet, synthetic resin sheet laminated with metallic foil, or the like. In packing the simplified analyzer 1, a drying agent, though not shown in the accompanying drawings, may be contained in the wrapping together with the simplified analyzer if required. The method for packing the simplified analyzer in the wrapping is not specifically limited, but it may be cited that the simplified analyzer 1 can be packed by being contained with the tube-like wrapping 17 made of film or sheet and sealing the both ends of the tube-like wrapping by thermal welding or ultrasonic welding.

FIG. 8 illustrates one simplified analyzer packed in the wrapping, and FIG. 9 illustrates five simplified analyzers packed in the wrapping by way of example. Thus, the number of simplified analyzers packed is not specifically limited. As shown in FIG. 8 and FIG. 9, a V-cut 18 may be formed in one edge portion of the moisture-proof wrapping 17 so as to make it easier to take out the simplified analyzer from the wrapping by tearing the wrapping from the V-cut 18.

In the embodiment described above, the color reaction reagent 11 is sealed in the container by way of example, but any fluid or material visible from the outside of the container may be contained therein. As one example, a reaction reagent for precipitation may be used.

Furthermore, the aforementioned embodiment includes the hermetic container 10 made transparent or semitransparent in entirety, but the hermetic container 10 may be made transparent or semitransparent in part as long as the content in the container can be visibly checked from the outside.

Only the manner of using the simplified analyzer 1 for making an analysis of water quality was described above, but the simplified analyzer of the invention may be applied for gas detection or the like.

### INDUSTRIAL APPLICABILITY

As is apparent from the foregoing disclosure, the simplified analyzer according to the present invention can easily be handled in safety by anyone only by pulling out the tap member to let out the air of the hermetic container and suck the testing fluid into the hermetic container without using any separate tool such as a pin. Furthermore, since the simplified analyzer of the invention intrinsically has the tap member, the through hole having a desirable diameter can be made at a suitable position of the hermetic container for sucking the testing fluid into the container, consequently to eliminate differences between individuals in conducting various kinds of analyses and enhance the reliability of analysis.

## Claims

1. A simplified analyzer (1) comprising a see-through hermetic container. (10) containing a reaction reagent (11), and a tap member (12) **characterised in that** said hermetic container has a seam portion (15), and said tap member (12) is detachably embedded in said seam portion (15).

2. The simplified analyzer of claim 1, wherein said hermetic container (10) is of flexible plastic material.

3. The simplified analyzer of claim 2, wherein seam portions (15) are formed at both end parts of the hermetic container (10) by welding.

4. The simplified analyzer of any of claims 1 to 3, wherein said tap member (12) is formed of a string or rod material.

5. The simplified analyzer of any of claims 1 to 4, wherein said tap member (12) is provided at one end with a finger hook (14) having a larger diameter than the other part.

6. The simplified analyzer of any of the preceding claims, wherein a tip end of said tap member (12) is formed in an acuminate shape.

7. The simplified analyzer of claim 4, 5 or 6, wherein one tip end (24) of said tap member (12) protrudes outward over the other tip end as viewed in the longitudinal direction.

8. The simplified analyzer of any of the preceding claims, wherein said hermetic container (10) and said tap member (12) are formed in different colours.

9. The simplified analyzer of any of the preceding claims, wherein one or more of said analyzers are packed as one unit in a moisture-proof wrapping.

10. A method of manufacturing the simplified analyzer of any of the preceding claims, wherein said hermetic container (10) is produced by preheating an edge portion of said container and thermally sealing the preheated edge portion by welding while keeping said tap member in said edge portion.

## Patentansprüche

1. Vereinfachter Analysator (1), umfassend einen hermetischen Klarsichtbehälter (10), der ein Reaktionsreagens (11) und ein Anzapfglied (12) enthält, **dadurch gekennzeichnet, dass** der hermetische Behälter einen Nahtabschnitt (15) aufweist und das Anzapfglied (12) abnehmbar in dem Nahtabschnitt (15) eingebettet ist.

2. Vereinfachter Analysator nach Anspruch 1, wobei der hermetische Behälter (10) aus einem flexiblen Kunststoffmaterial besteht.

3. Vereinfachter Analysator nach Anspruch 2, wobei Nahtabschnitte (15) an beiden Endteilen des hermetischen Behälters (10) durch Schweißen gebildet werden.

4. Vereinfachter Analysator nach einem der Ansprüche 1 bis 3, wobei das Anzapfglied (12) aus einem Strang-oder Stabmaterial gebildet ist.

5. Vereinfachter Analysator nach einem der Ansprüche 1 bis 4, wobei das Anzapfglied (12) an einem Ende mit einem Fingerhaken (14) mit einem größeren Durchmesser als der andere Teil versehen ist.

6. Vereinfachter Analysator nach einem der vorstehenden Ansprüche, wobei ein Spitzenende des Anzapfglieds (12) in einer zugespitzten Form gebildet ist.

7. Vereinfachter Analysator nach Anspruch 4, 5 oder 6, wobei ein Spitzenende (24) des Anzapfglieds (12), gesehen in der Längsrichtung, über das andere Spitzenende nach außen hervorragt.

8. Vereinfachter Analysator nach einem der vorstehenden Ansprüche, wobei der hermetische Behälter (10) und das Anzapfglied (12) in verschiedenen Farben gebildet sind.

9. Vereinfachter Analysator nach einem der vorstehenden Ansprüche, wobei einer oder mehrere der Analysatoren als eine Einheit in einer feuchtigkeitsgeschützten Verpackung verpackt sind.

10. Verfahren zur Herstellung des vereinfachten Analysators nach einem der vorstehenden Ansprüche, wobei der hermetische Behälter (10) hergestellt wird, indem ein Kantenabschnitt des Behälters vorerhitzt und der vorerhitzte Kantenabschnitt heißverschweißt wird, während das Anzapfglied in dem Kantenabschnitt gehalten wird.

## Revendications

1. Analyseur simplifié (1) comprenant un contenant hermétique transparent (10) qui contient un agent de réaction (11), et un élément de perçage (12) **caractérisé en ce que** ledit contenant hermétique comporte une partie de couture (15), et ledit élément de perçage (12) est incorporé de façon amovible dans ladite partie de couture (15).

2. Analyseur simplifié selon la revendication 1, dans lequel ledit contenant hermétique (10) est en un matériau plastique souple.

3. Analyseur simplifié selon la revendication 2, dans lequel les parties de couture (15) sont formées au niveau des deux parties d'extrémité du contenant hermétique (10) par soudage.

4. Analyseur simplifié selon l'une quelconque des revendications 1 à 3, dans lequel ledit élément de perçage (12) est formé en un matériau de cordon ou de tige.

5. Analyseur simplifié selon l'une quelconque des revendications 1 à 4, dans lequel ledit élément de perçage (12) est doté à une extrémité d'un crochet de doigt (14) ayant un diamètre supérieur à celui de l'autre partie.

6. Analyseur simplifié selon l'une quelconque des revendications précédentes, dans lequel une extrémité de pointe dudit élément de perçage (12) a une forme acuminée.

7. Analyseur simplifié selon la revendication 4, 5 ou 6, dans lequel une extrémité de pointe (24) dudit élément de perçage (12) fait saillie vers l'extérieur au-delà de l'autre pointe telle que vue dans le sens longitudinal.

8. Analyseur simplifié selon l'une quelconque des revendications précédentes, dans lequel ledit contenant hermétique (10) et ledit élément de perçage (12) sont formés dans des couleurs différentes.

9. Analyseur simplifié selon l'une quelconque des revendications précédentes, un ou plusieurs desdits analyseurs étant emballés en un tout dans un emballage étanche à l'humidité.

10. Procédé de fabrication de l'analyseur simplifié selon l'une quelconque des revendications précédentes, dans lequel ledit contenant hermétique (10) est produit en préchauffant une partie de bord dudit contenant et en scellant thermiquement la partie de bord préchauffé par soudage tout en maintenant ledit élément de perçage dans ladite partie de bord.
